# EUROPÄISCHE PATENTSCHRIFT

(11) **EP 0 493 359 B1**
(45) Veröffentlichungstag und Bekanntmachung des Hinweises auf die Patenterteilung: **12.04.1995**
(21) Anmeldenummer: 91890304.8
(22) Anmeldetag: 12.12.1991
(51) Int. Cl.: B29D 30/06, B29C 33/02, B29C 33/42

(54) **Reifenvulkanisierform**
Vulcanising moulds for tyres
Moule de vulcanisation de pneus

(30) Priorität: 21.12.1990 AT 2617/90
(43) Veröffentlichungstag der Anmeldung: 01.07.1992
(73) Patentinhaber: Semperit Reifen Aktiengesellschaft, A-2514 Traiskirchen (AT)
(72) Erfinder: Stelzer, Josef, Ing., A-1120 Wien (DE); Kuzmany, Dietrich, Dipl.-Ing., A-2512 Tribuswinkel (DE)
(74) Vertreter: Vinazzer, Edith

(56) Entgegenhaltungen:
- EP-A- 0 006 289
- FR-A- 2 111 377
- US-A- 4 568 259

## Beschreibung

Die Erfindung betrifft eine Reifenvulkanisierform mit einem Formkörperteil, der eine die Profilierung der Lauffläche und gegebenenfalls der Schulterbereiche eines Reifens formende, Formprofilstege tragende Formfläche aufweist.

Herkömmliche Reifenvulkanisierformen bestehen beispielsweise aus zwei Seitenwandformschalen und aus einer in Radialrichtung in mehrere Segmente geteilten Profilformschale. An der Profilformschale, die eine im allgemeinen durch Spanabhebung geformte glatte Innenformfläche aufweist, sind Formprofilstege befestigt, beispielsweise angenietet, die aus Stahl oder Aluminium bestehen und die mitsamt der Innenformfläche eine Negativabbildung des herzustellenden Reifen, insbesondere des Laufflächenprofiles desselben, darstellen. Durch die Formprofilstege werden die am fertigen Reifen gewünschten Nuten, wie Quernuten, Umfangsnuten und dergleichen geformt. Insbesondere am Grund der Profilnuten kommt es bei der Vulkanisation, und zwar bedingt durch das dort im Vergleich zum Block oder Laufflächenband geringere Laufflächenmischungsvolumen, zu einer höheren Vernetzung der Mischung.

Dies wiederum begünstigt die Rißbildung in den Profilnuten, was sich nachteilig auf die Haltbarkeit und die Lebensdauer des Reifens auswirkt.

Aus der US-A 4568259 ist eine Reifenvulkanisierform bekannt, die als zweiteilige Form ausgeführt ist. Die die Laufstreifenprofilierung formenden Formteile sind aus Aluminium gefertigt.

Aus der EP-A 0 006 289 ist eine Form zur Herstellung von Kunststoffartikeln bekannt, bei der die die Vorsprünge oder dergleichen formenden Formvertiefungen mit einem isolierenden Material ausgelegt sind, um am fertigen Produkt das Entstehen von Senken zu verbinden.

Die Erfindung hat sich die Aufgabe gestellt, eine Reifenvulkanisierform so zu gestalten, daß die genannte Rißbildung nicht mehr bzw. nicht mehr in so großem Ausmaß als bisher auftritt.

Gelöst wird die gestellte Aufgabe erfindungsgemäß dadurch, daß zumindest ein Teil der Formprofilstege zumindest teilweise aus einem Material mit einem Wärmeleitfähigkeitskoeffizienten, der wesentlich kleiner ist als jener von Aluminium oder Stahl, besteht.

Zweckmäßige Weiterbildungen der Erfindung sind in den Ansprüchen 2 bis 6 beschrieben.

Nach der Erfindung wird daher vorgeschlagen, den Wärmeübergang zu erschweren und somit eine gegenüber der bekannten Stahl- oder Aluminiumausführung für Formprofilstege geringere Vernetzung am Profilnutgrund zu erzielen. Dadurch kann wirkungsvoll die Rißbildung am Nutengrund verhindert bzw. verringert werden, da eine Überheizung, wie sie bei den Ausführungen nach dem Stand der Technik zwangsweise erfolgt, nicht mehr stattfindet.

Gemäß einer bevorzugten Ausführungsvariante der Erfindung bestehen die Formprofilstege zumindest zum Teil aus einem Kunststoff, insbesondere aus einem Polyimid. Dieses Material ist auch wegen seiner hohen Festigkeit und seiner hohen Temperaturbeständigkeit besonders geeignet.

Bei einer ersten Ausführungsvariante der Erfindung weisen die Formprofilstege einen Fußteil von insbesondere konstanter Dicke auf, der aus dem Material mit niedrigem Wärmeleitfähigkeitskoeffizenten besteht. Die Dicke dieses Fußteiles sollte dabei mindestens 2,5 mm betragen.

Bei einer weiteren Ausführungsvariante der Erfindung ist vorgesehen, daß die Formprofilstege komplett aus dem Material mit dem niedrigen Wärmeleitfähigkeitskoeffizienten bestehen.

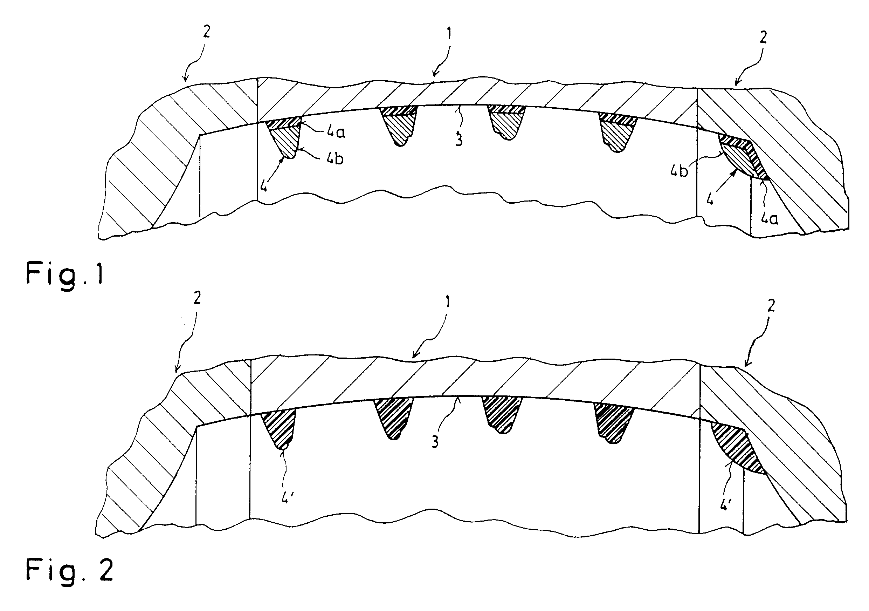

Weitere Merkmale Vorteile und Einzelheiten der Erfindung werden nun anhand der Zeichnung, die zwei Ausführungsbeispiele darstellt, näher beschrieben. Dabei zeigt Fig. 1 einen Teil eines Querschnittes durch eine Reifenvulkanisationsform mit einer ersten Ausführungsform der Erfindung und Fig. 2 eine zweite Ausführungsvariante der Erfindung in einer zu Fig. 1 analogen Darstellung.

Eine Reifenvulkanisierform weist üblicherweise zwei Seitenschalen und eine Profilformschale, die sich beispielsweise aus bis zu 8 Profilsegmenten zusammensetzt, auf. In den Zeichnungsfiguren sind ein Profilsegment 1 und die Seitenschalen 2 dargestellt, die eine Innenformfläche 3, die üblicherweise durch Spanabhebung hergestellt ist, besitzen.

Auf die Profilsegmente 1 und die Seitenschalen 2 sind Formprofilstege, die schließlich die Ausgestaltung des Laufflächenprofiles mit Umfangsnuten, Quernuten und dergleichen am Reifen bewirken, angebracht. Diese Formprofilstege bestehen üblicherweise aus Metall, insbesondere aus Aluminium.

Nach dem ersten Ausführungsbeispiel der vorliegenden Erfindung, wie es in Fig. 1 dargestellt ist, sind die Formprofilstege 4 zweiteilig gestaltet und bestehen aus einem Fußteil 4a und einem Kopfteil 4b. Der Fußteil 4a, der an der Innenformfläche 3 anliegt, ist aus einem Material mit einer niedrigen Wärmeleitzahl gefertigt. Die Dicke des Fußteiles 4a und die Höhe des Kopfteiles 4b sind derart aufeinander abgestimmt, daß schließlich die gewünschte Profiltiefe am fertig vulkanisierten Reifen vorliegt. Die Befestigung der Formprofilstege 4 kann in herkömmlicher Weise, beispielsweise durch Aufnieten erfolgen. Als Material für den Fußteil 4a sind insbesondere Kunststoffe mit einer hohen Temperaturbeständigkeit geeignet. Eine dieser Kunststoffe ist Polyimid, welches einen Wärmeleitfähigkeitskoeffizienten von 1 W/mK aufweist. Im Vergleich dazu beträgt dieser Koeffizient bei Gummi 0,24 W/mK und bei Aluminium 165 W/mK. Die Mindestdicke des Fußteiles 4a bei Verwendung von Polyimid sollte 2,5 mm nicht unterschreiten. Durch den Fußteil 4a wird demnach eine isolierende Schicht gebildet, die den Wärmeübergang erschwert, so daß in den durch die Formprofilstege gebildeten Profilnuten, vor allem am Nutgrund, eine wesentlich geringere Überheizung als bei herkömmlichen Ausgestaltungen erfolgt. Der fertig vulkanisierte Reifen wird demnach nicht oder kaum noch zur Rißbildung am Nutengrund neigen.

Die in Fig. 1 dargestellte Ausführungsvariante ist einfach herzustellen, indem der Fußteil 4a, beispielsweise durch Formen oder Spanabhebungen hergestellt wird.

Fig.2 zeigt eine Ausführungsvariante, bei der die Formprofilstege 4' selbst aus einem Material mit einem niedrigen Wärmeleitfähigkeitskoeffizienten gefertigt sind. Auch für diese Ausführungsvariante ist der Kunststoff Polyimid geeignet. Im Vergleich zur ersten Ausführungsvariante ist diese Ausführungsvariante in der Herstellung etwas aufwendiger.

Als weitere Materialien für den Fußteil der Formprofilstege kommen verschiedene andere, insbesondere gefüllte oder faserverstärkte Kunststoffe, beispielsweise Turboplaste, in Frage. Als verstärkende Fasern sind vor allem Carbonfasern geeignet. Besonders geeignet sind dabei Kunststoffe, die einen Wärmeleitfähigkeitskoeffizienten < 5W/mK aufweisen.

## Patentansprüche

1. Reifenvulkanisierform mit einem Formkörperteil, der eine die Profilierung der Lauffläche und gegebenenfalls der Schulterbereiche eines Reifens formende, Formprofilstege (4, 4') tragende Formfläche (3) aufweist, dadurch gekennzeichnet, daß zumindest ein Teil der Formprofilstege (4, 4') zumindest teilweise aus einem Material mit einem Wärmeleitfähigkeitskoeffizienten, der wesentlich kleiner ist als jener von Aluminium oder Stahl, besteht.

2. Reifenvulkanisierform nach Anspruch 1, dadurch gekennzeichnet, daß die Formprofilstege (4) zumindest zum Teil aus einem Material mit einem Wärmeleitfähigkeitskoeffizienten < 5W/mK bestehen.

3. Reifenvulkanisierform nach Anspruch 1 oder 2, dadurch gekennzeichnet, daß die Formprofilstege (4) zumindest zum Teil aus einem Kunststoff, insbesondere aus einem Polyimid, bestehen.

4. Reifenvulkanisierform nach einem der Ansprüche 1 bis 3, dadurch gekennzeichnet, daß die Formprofilstege (4) einen Fußteil (4a) von insbesondere konstanter Dicke aufweisen, der aus dem Material mit niedrigem Wärmeleitfähigkeitskoeffizienten besteht.

5. Reifenvulkanisierform nach Anspruch 4, dadurch gekennzeichnet, daß die Dicke des Fußteiles (4a) mindestens 2,5 mm beträgt.

6. Reifenvulkanisierfom nach einem der Ansprüche 1 bis 4, dadurch gekennzeichnet, daß die Formprofilstege (4') komplett aus dem Material mit dem niedrigen Wärmeleitfähigkeitskoeffizienten bestehen.

## Claims

1. Tyre vulcanising mould, having a mould body member provided with a mould face (3), which forms the profiling of the tread surface and possibly the shoulder regions of a tyre and has mould profile webs (4, 4'), characterised in that at least some of the mould profile webs (4, 4') are at least partially formed from a material having a coefficient of thermal conductivity which is substantially smaller than that of aluminium or steel.

2. Tyre vulcanising mould according to claim 1, characterised in that at least some of the mould profile webs (4) are formed from a material having a coefficient of thermal conductivity smaller than 5W/mK.

3. Tyre vulcanising mould according to claim 1 or 2, characterised in that at least some of the mould profile webs (4) are formed from a plastics material, more especially from a polyimide.

4. Tyre vulcanising mould according to one of claims 1 to 3, characterised in that the mould profile webs (4) have a base portion (4a) which is especially of a constant thickness and is formed from the material having a low coefficient of thermal conductivity.

5. Tyre vulcanising mould according to claim 4, characterised in that the thickness of the base portion (4a) is at least 2.5 mm.

6. Tyre vulcanising mould according to one of claims 1 to 4, characterised in that the mould profile webs (4') are completely formed from the material having the low coefficient of thermal conductivity.

## Revendications

1. Moule de vulcanisation pour pneumatiques comportant une partie de corps de moule qui présente une face (3) portant les entretoises de profilé de moule (4, 4') formant le profilage de la chape ou bande de roulement éventuellement des zones d'épaulement du pneumatique, caractérisé en ce qu'au moins une partie des entretoises de profilé de moule (4, 4') sont au moins constitués en partie d'un matériau possédant un coefficient de conductibilité thermique sensiblement inférieur à celui de l'aluminium ou de l'acier.

2. Moule de vulcanisation pour pneumatiques selon la revendication 1, caractérisé en ce que les entretoises de profilé de moule (4) consistent au moins en partie en un matériau possédant un coefficient de conductibilité thermique < 5W/mK.

3. Moule de vulcanisation pour pneumatiques selon la revendication 1 ou 2, caractérisé en ce que les entretoises de profilé de moule (4) consistent au moins en partie en une matière synthétique, en particulier en un polyimide.

4. Moule de vulcanisation pour pneumatiques selon l'une des revendications 1 à 3, caractérisé en ce que les entretoises de profilé de moule (4) comportent une partie de talon (4a) présentant en particulier une épaisseur constante et qui consiste en un matériau ayant un faible coefficient de conductibilité thermique.

5. Moule de vulcanisation pour pneumatiques selon la revendication 4, caractérisé en ce que l'épaisseur de la partie de talon (4a) est égale à au moins 2,5 mm.

6. Moule de vulcanisation pour pneumatiques selon l'une des revendications 1 à 4, caractérisé en ce les entretoises de profilé de moule (4') sont entièrement constituées du matériau possédant le faible coefficient de conductibilité thermique.
